# EUROPÄISCHE PATENTANMELDUNG

(11) **EP 2 136 076 A2**
(43) Veröffentlichungstag der Anmeldung: **23.12.2009**
(21) Anmeldenummer: 09007368.5
(22) Anmeldetag: 04.06.2009
(51) Int. Cl.: F03D 7/04

(54) **Verfahren zur Steuerung eines Windparks**

(30) Priorität: 16.06.2008 DE 102008028573
(71) Anmelder: Nordex Energy GmbH, 22848 Norderstedt (DE)
(72) Erfinder: Jurkat, Mark, 22844 Norderstedt (DE)
(74) Vertreter: Hauck Patent- und Rechtsanwälte

(57) **Zusammenfassung**

Die Erfindung betrifft ein Verfahren zur Steuerung eines Windparks mit mehreren Windenergieanlagen und mehreren Steuerungseinheiten, die Steuerungsaufgaben innerhalb des Windparks ausführen, umfassend die folgenden Schritte:
a) den Steuerungseinheiten wird abhängig von den durch sie auszuführenden Steuerungsaufgaben jeweils eine Priorität zugeordnet,
b) die Steuerungseinheiten kommunizieren während des Betriebs des Windparks fortlaufend miteinander und/oder mit einer zentralen Kommunikationseinheit,
c) sofern ein Defekt einer ersten Steuerungseinheit des Windparks eintritt, übernimmt eine zweite Steuerungseinheit des Windparks die Steuerungsaufgaben der defekten Steuerungseinheit, wobei die zweite Steuerungseinheit abhängig von der ihr zugeordneten Priorität ausgewählt wird und die gleiche oder eine niedrigere Priorität besitzt als die defekte Steuerungseinheit.

## Beschreibung

Die Erfindung betrifft ein Verfahren zur Steuerung eines Windparks mit mehreren Windenergieanlagen und mehreren Steuerungseinheiten, die Steuerungsaufgaben innerhalb des Windparks ausführen. Ein Windpark besteht aus mehreren Systemen. Hierzu zählen beispielsweise Windenergieanlagen, Wettermasten, Mess-Stationen in Übergabestationen, zentrale Windparksteuerungen, Condition-Monitoring-Systeme (CMS) und andere Steuerungen. Jedes der Systeme eines Windparks hat eine eigene Aufgabe und besitzt eine oder mehrere Steuerungseinheiten, um die jeweils zugeordneten Steuerungsaufgaben zu erfüllen. Zusätzlich besitzt jedes der Systeme üblicherweise Ein- und/oder Ausgabebaugruppen, welche an die für das System nötigen Sensoren und/oder Aktoren angeschlossen sind. So besitzt z.B. ein Wettermast Sensoren für Luftdruck, Windgeschwindigkeit, Windrichtung und Luftfeuchte. Eine Windenergieanlage besitzt hingegen z.B. Drehzahlsensoren oder als Aktoren Pumpen und Heizungen.

Ein Problem ergibt sich, wenn ein Defekt einer Steuerungseinheit auftritt. In einem solchen Fall können die von der Steuerungseinheit auszuführenden Steuerungsaufgaben unter Umständen nicht mehr ausgeübt werden. Dies kann den Betrieb des Windparks beeinträchtigen.

Ausgehend von dem erläuterten Stand der Technik liegt der Erfindung die Aufgabe zugrunde, ein Verfahren der eingangs genannten Art bereitzustellen, bei dem die Verfügbarkeit des Windparks und seiner Komponenten jederzeit gegeben ist.

Die Erfindung löst diese Aufgabe durch die Gegenstände der unabhängigen Patentansprüche 1 und 11. Vorteilhafte Ausgestaltungen finden sich in den abhängigen Ansprüchen, der Beschreibung und den Figuren.

Gemäß einem ersten Aspekt der Erfindung wird die Aufgabe gelöst durch ein Verfahren der eingangs genannten Art, umfassend die folgenden Schritte:
a) den Steuerungseinheiten wird abhängig von den durch sie auszuführenden Steuerungsaufgaben jeweils eine Priorität zugeordnet,
b) die Steuerungseinheiten kommunizieren während des Betriebs des Windparks fortlaufend miteinander und/oder mit einer zentralen Kommunikationseinheit, und
c) sofern ein Defekt einer ersten Steuerungseinheit des Windparks eintritt, übernimmt eine zweite Steuerungseinheit des Windparks die Steuerungsaufgaben der defekten Steuerungseinheit, wobei die zweite Steuerungseinheit abhängig von der ihr zugeordneten Priorität ausgewählt wird und die gleiche oder eine niedrigere Priorität besitzt als die defekte Steuerungseinheit.

Die Steuerungseinheiten dienen erfindungsgemäß zur Steuerung unterschiedlicher Komponenten des Windparks, z.B. Windenergieanlagen, Wetterstationen (Wettermasten), Messungen an Übergabestationen, CMS usw. Sie können auch zu einer zentralen Windparksteuerung gehören. Die Steuerungseinheiten können Teil von Steuerungssystemen mit Ein- und/oder Ausgabebaugruppen sein, welche mit den für das jeweilige System erforderlichen Aktoren und/oder Sensoren verbunden sind. Jedes System kann eine oder mehrere Steuerungseinheiten aufweisen. Grundsätzlich können die Steuerungseinheiten neben einer Steuerung selbstverständlich auch eine Regelung ausführen.

Gemäß dem ersten Aspekt der Erfindung werden den Steuerungseinheiten unterschiedliche Prioritäten zugeordnet, wobei diese abhängig von der Bedeutung der jeweiligen Steuerungseinheit für den Windpark vergeben werden. So ist beispielsweise das Protokollieren einer Windgeschwindigkeit oder der Leistung an einem bestimmten Messpunkt unter bestimmten Umständen nicht so wichtig, wie das Erzeugen von Leistung durch eine Windenergieanlage. Ebenso kann der Betrieb einer einzelnen Windenergieanlage weniger wichtig sein, als beispielsweise die zentrale Steuerung eines Windparks mit mehreren Windenergieanlagen, sofern eine solche Steuerung beispielsweise als Voraussetzung zum Betrieb des Windparks vorgeschrieben ist. Die Steuerungseinheiten stehen in fortlaufender Kommunikation. Diese kann z.B. zyklisch in regelmäßigen Abständen erfolgen. Im Rahmen dieser Kommunikation können sie z.B. Daten auf dezentrale Speicher (Flash o.ä.) der anderen Steuerungseinheiten schreiben oder einer zentralen Kommunikationseinheit mitteilen. Im Rahmen der Kommunikation übermitteln die Steuerungseinheiten z.B. ihren jeweiligen Status. Sie können aber auch Mess- und/Steuerdaten, Einstellungen usw. übermitteln. Die zentrale Kommunikationseinheit kann eine Mastersteuerung sein mit einem oder mehreren Masterservern. Aufgrund der fortlaufenden Kommunikation der Steuerungseinheiten ist jederzeit bekannt, welche der Steuerungseinheiten betriebsbereit sind und welche nicht.

In dem vorliegenden Zusammenhang liegt ein Defekt einer Steuerungseinheit (z.B. ein Ausfall) vor, wenn diese nicht mehr an der Kommunikation teilnimmt. Die Steuerungsaufgaben der defekten Steuerungseinheit werden dann von einer anderen Steuerungseinheit mit der gleichen oder einer niedrigeren Priorität übernommen. Dadurch kommt es beispielsweise in dem Fall, dass die Steuerungseinheit, die die Aufgaben der defekten Steuerungseinheit übernimmt, ihre eigenen Steuerungsaufgaben anschließend nicht mehr ausführen kann, zu keinem Ausfall wichtigerer Steuerungsaufgaben als die der defekten Steuerungseinheit. Bei einer niedrigeren Priorität der die Steuerungsaufgaben der defekten Steuerungseinheit übernehmenden Steuerungseinheit fallen dann nur für den Betrieb des Windparks weniger wichtige Steuerungsaufgaben aus. Es ist somit sichergestellt, dass im Rahmen der zur Verfügung stehenden Steuerungskapazität die wichtigsten Steuerungsaufgaben des Windparks jederzeit ausgeführt werden. Es kann vorteilhaft sein, wenn die die Steuerungsaufgaben der defekten Steuerungseinheit übernehmende Steuerungseinheit die niedrigste zu vergebende Priorität besitzt. Es ist dann bei einem Ausfall mehrerer Steuerungseinheiten nur eine minimale Änderung der Zuordnung von Steuerungsaufgaben erforderlich.

Die Auswahl der für die defekte Steuerungseinheit "einspringenden" Steuerungseinheit kann automatisch erfolgen, beispielsweise durch die zentrale Kommunikationseinheit bewirkt werden oder aufgrund einer vorher festgelegten Reihenfolge erfolgen. Die Auswahl kann aber auch manuell durch eine Bedienperson erfolgen. Die zentrale Kommunikationseinheit kann für die Verteilung der Steuerungsaufgaben Priorisierungsvorschriften besitzen.

Sobald die defekte Steuerungseinheit wieder funktionstüchtig ist, übernimmt sie wieder ihre Aufgaben und die zuvor ihre Aufgaben temporär übernehmende Steuerungseinheit führt wieder ihre eigenen Aufgaben oder Steuerungsaufgaben einer anderen ausgefallenen Steuerungseinheit durch. Auf diese Weise kann ein sukzessives Wiederaufnehmen von Steuerungsaufgaben nach Priorität erfolgen.

Das erfindungsgemäße Verfahren erhöht die Verfügbarkeit von Steuerungssystemen in einem Windpark durch eine intelligente redundante Aufgabenverteilung. Dabei können wichtige defekte Einzelsystemsteuerungen temporär ersetzt werden, so dass jederzeit sichergestellt ist, dass wichtige Aufgaben ausgeführt werden. Das Verfahren ist insbesondere bei größeren oder schwer erreichbaren Windparks, z.B. Offshore-Windparks, vorteilhaft. Die Redundanz muss sich dabei nicht notwendigerweise auf Steuerungen in einem Windpark beschränken. Vielmehr könnte sie beispielsweise auch auf Visualisierungen bzw. historischen Datenspeichern, welche PC-basiert laufen, zum Einsatz kommen.

Die Kommunikation zwischen den Steuerungen und mit der zentralen Kommunikationseinheit erfolgt bevorzugt über eine Bus-Technologie. Diese kann z.B. über Funk, LWL (Lichtwellenleiter) oder auch elektrisch mit verschiedenen Protokolltechniken, wie Ethernet, Profinet, Ethercat usw. betrieben werden. Dabei kann das benötigte Protokollmedium jeder Steuerungseinheit in einem Windparknetzwerk zur Verfügung stehen. Die entsprechende Hardware muss dann für die eingesetzten Protokolle/Bus-Systeme ausgelegt sein.

Gemäß einer Ausgestaltung kann die zweite Steuerungseinheit vor der Übernahme der Steuerungsaufgaben der defekten Steuerungseinheit eigene Steuerungsaufgaben ausgeführt haben. Nach der Übernahme der Steuerungsaufgaben der defekten Steuerungseinheit ist es möglich, dass die zweite Steuerungseinheit die zuvor ausgeführten eigenen Steuerungsaufgaben weiterhin ausführt. In diesem Fall kann die Steuerungseinheit also mehrere Aufgaben gleichzeitig ausführen, z.B. zwei oder mehr. Es kommt dann zu keinem Ausfall von Steuerungstätigkeiten. Es ist aber auch möglich, dass die zweite Steuerungseinheit nach der Übernahme der Steuerungsaufgaben der defekten Steuerungseinheit die zuvor ausgeführten eigenen Steuerungsaufgaben nicht mehr ausführt. Es ist dann denkbar, dass eine dritte Steuerungseinheit des Windparks die Steuerungsaufgaben der zweiten Steuerungseinheit übernimmt. Die dritte Steuerungseinheit kann die Steuerungsaufgaben der zweiten Steuerungseinheit zusätzlich zu ihren eigenen Aufgaben aufnehmen oder anstelle von eigenen Aufgaben. In jedem Fall kann durch die sukzessive Weiterverteilung der Steuerungsaufgaben die Verfügbarkeit der Windparksteuerung weiter erhöht werden. Insbesondere wenn die dritte Steuerungseinheit die Steuerungsaufgaben der zweiten Steuerungseinheit anstelle der eigenen Aufgaben ausführt, kann die dritte Steuerungseinheit wiederum abhängig von der ihr zugeordneten Priorität ausgewählt werden und die gleiche oder eine niedrigere Priorität besitzen als die zweite Steuerungseinheit. Es ist dann wiederum sichergestellt, dass lediglich für den Windpark weniger bedeutende Steuerungsaufgaben ausfallen.

Die zweite Steuerungseinheit kann auch eine Ersatzsteuerungseinheit sein, die vor Übernahme der Steuerungsaufgaben der defekten Steuerungseinheit keine eigenen Steuerungsaufgaben ausgeführt hat. Es wird also eine Reservesteuerungseinheit vorgehalten, die nur zur Übernahme der Aufgaben von defekten Steuerungseinheiten dient. Es ist dann sichergestellt, dass es im Fall eines Defekts einer Steuerungseinheit nicht zu einem Ausfall von Steuerungsaufgaben des Windparks kommt.

Um sicherzustellen, dass bei weiteren Ausfällen von Steuerungseinheiten eine bereits für eine höher priorisierte Steuerungseinheit eingesprungene Steuerungseinheit nicht zur Übernahme weiterer, möglicherweise niedriger priorisierter Steuerungsaufgaben herangezogen wird und somit möglicherweise ihre höher priorisierten Steuerungsaufgaben der zuerst defekten Steuerungseinheit nicht mehr ausführen kann, kann einer ersten Steuerungseinheit nach der Übernahme der Steuerungsaufgaben einer zweiten Steuerungseinheit mit höherer Priorität so lange die höhere Priorität der zweiten Steuerungseinheit zugeordnet werden, wie sie die Steuerungsaufgaben der zweiten Steuerungseinheit ausführt.

Gemäß einem zweiten Aspekt der Erfindung wird die Aufgabe durch ein Verfahren der eingangs genannten Art gelöst, umfassend die folgenden Schritte:
a) die Steuerungseinheiten kommunizieren während des Betriebs des Windparks fortlaufend miteinander und/oder mit einer zentralen Kommunikationseinheit,
b) sofern ein Defekt einer ersten Steuerungseinheit des Windparks eintritt, übernimmt eine zweite Steuerungseinheit des Windparks, die zuvor eigene Steuerungsaufgaben ausgeführt hat, die Steuerungsaufgaben der defekten Steuerungseinheit, wobei die zweite Steuerungseinheit abhängig davon ausgewählt wird, ob sie eine ausreichende Kapazität zur Ausführung der Steuerungsaufgaben der defekten Steuerungseinheit zusätzlich zu ihren eigenen Steuerungsaufgaben besitzt, und die zweite Steuerungseinheit nachfolgend sowohl ihre eigenen Steuerungsaufgaben, als auch die Steuerungsaufgaben der defekten Steuerungseinheit ausführt.

Bezüglich des zweiten Aspekts der Erfindung gilt das bereits zum ersten Aspekt der Erfindung Gesagte in analoger Weise. Im Unterschied zu dem ersten Aspekt der Erfindung muss bei dem zweiten Aspekt jedoch keine Priorisierung der Steuerungseinheiten erfolgen (selbstverständlich können den Steuerungseinheiten aber auch Prioritäten zugeordnet werden, wie beim ersten Aspekt der Erfindung). Die Auswahl der die Steuerungsaufgaben der defekten Steuerungseinheit übernehmenden Steuerungseinheit erfolgt bei diesem Aspekt der Erfindung danach, ob diese eine ausreichende Kapazität besitzt, um sowohl ihre eigenen Steuerungsaufgaben als auch die Steuerungsaufgaben der defekten Steuerungseinheit auszuführen. Sofern also dennoch eine Priorisierung der Steuerungseinheiten erfolgt, kann die die Aufgaben der defekten Steuerungseinheit übernehmende Steuerungseinheit auch eine höhere Priorität besitzen als die defekte Steuerungseinheit. Bei diesem Aspekt der Erfindung ist somit gewährleistet, dass auch bei einem Ausfall einer Steuerungseinheit noch alle Steuerungsaufgaben des Windparks ausgeführt werden können.

Gemäß einer weiteren Ausgestaltung der Erfindung kann mindestens eine Steuerungseinheit mindestens ein Steuerungsprogramm zur Ausführung der Steuerungsaufgaben mindestens einer anderen Steuerungseinheit des Windparks aufweisen. Die Windenergieanlagensteuerungen eines Windparks können grundsätzlich das gleiche Steuerungsprogramm aufweisen. Weiterhin können beispielsweise sämtliche Wettermasten des Windparks ihr eigenes Programm besitzen und die zentralen Parksteuerungen wiederum ihr eigenes Programm. Dabei sind beispielsweise die einzelnen Windenergieanlagen lediglich unterschiedlich parametriert. Damit dennoch eine Windenergieanlagensteuerung beispielsweise eine zentrale Parksteuerung im Fall eines Defekts ersetzen kann, muss der Windenergieanlagensteuerung das Steuerungsprogramm der defekten Steuerungseinheit zur Verfügung gestellt werden. Insbesondere werden dabei das Aufgabengebiet, das Programm, Sensor-/ Aktoradressen sowie Betriebsparameter einmalig und/oder zyklisch, manuell und/oder automatisiert, zentral und/oder dezentral gespeichert. Bei dieser Ausgestaltung der Erfindung können beispielsweise in jeder Steuerungseinheit sämtliche oder bestimmte Steuerungsprogramme anderer Steuerungseinheiten, insbesondere einer oder mehrerer höher priorisierter Steuerungseinheiten, zusätzlich zu dem jeweils eigenen Steuerungsprogramm vorgehalten werden. So kann beispielsweise ein Wettermast das Windenergieanlagenprogramm besitzen, jedoch nicht das Windparksteuerprogramm. Dieses wiederum kann jedoch zusätzlich auf sämtlichen Windenergieanlagensteuerungen vorgesehen sein.

Alternativ ist es möglich, dass die Steuerungseinheiten ein Steuerungsprogramm zur Ausführung der Steuerungsaufgaben einer anderen Steuerungseinheit nach Bedarf von einer zentralen Kommunikationseinheit abrufen, bevor sie die Steuerungsaufgaben der anderen Steuerungseinheit übernehmen. Auch können sie das Programm von einer anderen Steuerungseinheit, beispielsweise einer zentralen Windparksteuerungseinheit, abrufen.

Wenn die Steuerungseinheiten mit einer zentralen Kommunikationseinheit kommunizieren, kann diese die Zuordnung der Steuerungsaufgaben zu den Steuerungseinheiten im Falle eines Defekts einer Steuerungseinheit durchführen. Die zentrale Kommunikationseinheit kann durch die zentrale Windparksteuerungseinheit gebildet sein. Sie kann aber auch eine von den Steuerungseinheiten separate Steuerungseinheit bilden. Die Kommunikationseinheit übernimmt die Verteilung der Steuerungsaufgaben auf die Steuerungseinheiten, insbesondere also die Entscheidung, welche Steuerungseinheit im Fall eines Defekts die Aufgaben der defekten Steuerungseinheit übernimmt. Dazu kann sie Priorisierungsvorschriften, beispielsweise eine Priorisierungstabelle, aufweisen. Zur Weiterbildung der Redundanz kann auch die zentrale Kommunikationseinheit mehrfach und damit redundant vorgesehen sein.

Gemäß einer alternativen Ausgestaltung können die Steuerungseinheiten miteinander kommunizieren und die Zuordnung der Steuerungsaufgaben zu den Steuerungseinheiten kann im Falle eines Defekts einer Steuerungseinheit automatisch entsprechend einer vorher festgelegten Reihenfolge erfolgen. Bei dieser Ausgestaltung muss also keine Kommunikation über eine zentrale Kommunikationseinheit erfolgen. Vielmehr erfolgt eine automatische Koordination der Aufgaben, wobei die Steuerungseinheiten selbst über die Aufgabenverteilung entscheiden. Dazu kann zuvor eine geeignete Reihenfolge der Steuerungseinheiten festgelegt werden.

Beide Aspekte der Erfindung mit ihren jeweiligen Ausgestaltungen können selbstverständlich auch miteinander kombiniert werden.

Ein Ausführungsbeispiel der Erfindung wird nachfolgend anhand von Figuren näher erläutert. Es zeigen:
Fig. 1 eine schematische Darstellung eines Windparks, und
Fig. 2 eine weitere schematische Darstellung des Windparks aus Figur 1.

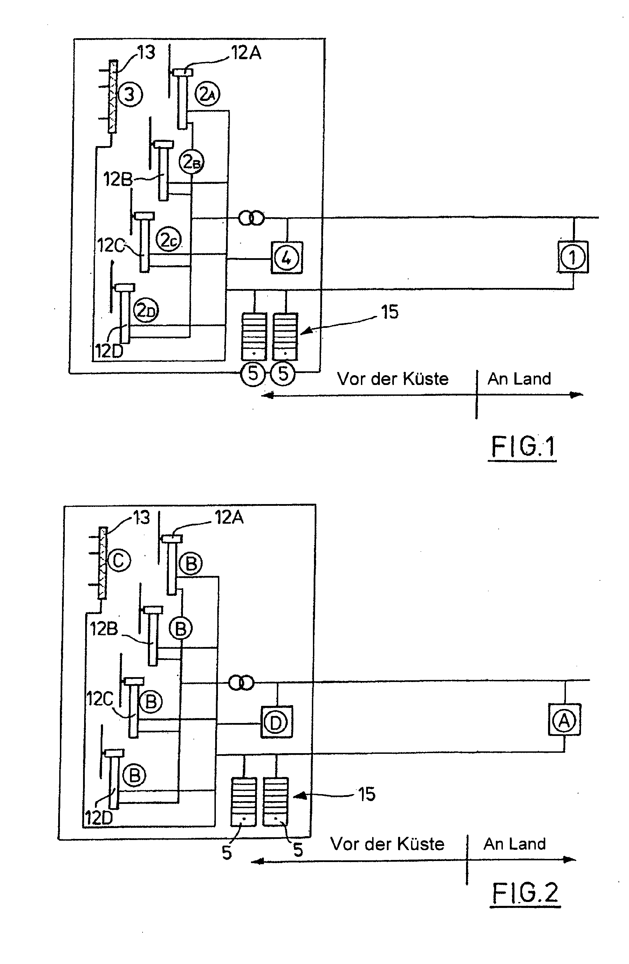

Soweit nichts anderes bestimmt ist, bezeichnen in den Figuren gleiche Bezugszeichen gleiche Gegenstände. In den Figuren 1 und 2 ist ein Windpark dargestellt, dessen Hauptkomponenten sich Offshore, also einer Küste vorgelagert im Meer befinden. Der Windpark besitzt mehrere Windenergieanlagen 12A, 12B, 12C, 12D. Zu ihrer Steuerung besitzen die Windenergieanlagen 12A, 12B, 12C, 12D jeweils eine schematisch dargestellte Steuerungseinheit 2A, 2B, 2C, 2D. Weiterhin weist der Windpark einen Wettermast 13 auf, der ebenfalls eine schematisch dargestellte Steuerungseinheit 3 besitzt. Eine weitere Steuerungseinheit 4 dient zur Steuerung einer zusätzlichen Messung, beispielsweise für einen Messpunkt 4. Darüber hinaus ist eine zentrale Kommunikationseinheit 15 vorgesehen, die in dem dargestellten Beispiel zwei zentrale Server 5 aufweist, auf denen Steuerungsprogramme, Mess- und Steuerdaten sowie Einstellungen bzw. Parameter gespeichert sind. Als einzige an der Küste (Onshore) angeordnete Komponente ist eine weitere Steuerungseinheit 1 vorgesehen, in dem Beispiel die zentrale Windparksteuerung zur Ansteuerung der verschiedenen Komponenten des Windparks. Alle Komponenten des Windparks sind über entsprechende Leitungen miteinander und mit der zentralen Kommunikationseinheit 15 verbunden. Selbstverständlich können auch weitere Steuerungseinheiten vorgesehen sein. In der Praxis ist es üblich, für jede Steuerungsaufgabe innerhalb des Windparks ein eigenes Steuerungssystem mit einer eigenen Steuerungseinheit vorzusehen. Der Aufbau eines solchen Windparks ist dem Fachmann an sich bekannt, so dass dieser nicht näher erläutert wird.

In Figur 2 ist der Windpark aus Figur 1 dargestellt, wobei den Steuerungseinheiten 1, 2A, 2B, 2C, 2D, 3, 4 Prioritäten nach der Bedeutung der von ihnen jeweils ausgeführten Steuerungsaufgaben für den Betrieb des Windparks zugeordnet wurden. Dabei ist Priorität A die höchste Priorität, Priorität B die nächst niedrigere, Priorität C die nächst niedrigere und Priorität D die niedrigste Priorität. In dem dargestellten Beispiel muss ein Windpark bestimmte Netzanschlussbedingungen eines Landes oder von Energieversorgungsunternehmen (EVU) erfüllen, um betrieben werden zu dürfen. Solche Bedingungen betreffend Leistungsreduktion, Spannungsregelung, Blindleistungsregelung usw. erfolgen an einem bestimmten Übergabepunkt, in dem dargestellten Beispiel an der Steuerungseinheit 1, die sich viele Kilometer entfernt von den übrigen Komponenten des Windparks befinden kann. Durch Kabelkapazitäten, Trafoinduktivitäten usw. kann die Blindleistung sehr stark von der Windenergieanlagenproduktion abweichen und muss gegebenenfalls nachgeregelt werden, um die vorgegebenen Anforderungen einzuhalten. Auch kann es in bestimmten Situationen erforderlich sein, eine von dem Energieversorger vorgegebene Wirkleistungsreduktion durchzuführen, um das Versorgungsnetz vor Überlast zu schützen. Daher muss die zentrale Steuerungseinheit 1 für die Steuerung und Regelung jederzeit zur Verfügung stehen. Aus diesem Grund erhält die Steuerungseinheit 1 die höchste Priorität A. Um den Windpark wirtschaftlich betreiben zu können, müssen die Windenergieanlagen Leistung produzieren, daher erhalten die Windenergieanlagensteuerungen die nächst niedrigere Priorität B. Das Überwachen des Wetters mit dem Wettermast 13 und der zugeordneten Steuerungseinheit 3 sowie das Überwachen eines weiteren Messpunktes mit der Steuerungseinheit 4 sind dagegen weniger wichtig, so dass diese die niedrigeren Prioritäten C und D erhalten. Selbstverständlich können die Priorisierungen von Projekt zu Projekt unterschiedlich sein. Es ist beispielsweise möglich, dass Netzanschlussregeln in Ausnahmesituationen nicht einzuhalten sind und somit auch die Steuerungseinheit 1 eine niedrigere Priorisierung erhält.

Das erfindungsgemäße Verfahren soll anhand eines Beispiels erläutert werden:

Sämtliche Steuerungseinheiten 1, 2A, 2B, 2C, 2D, 3, 4 des Windparks kommunizieren fortlaufend, z.B. jede Sekunde, mit den Servern 5 der zentralen Kommunikationseinheit 15 und übertragen dabei unter anderem ihren jeweiligen Status. Selbstverständlich kann der zeitliche Zyklus der Kommunikation auch anders sein. Nun meldet beispielsweise die Windenergieanlage 12C über ihre Steuerungseinheit 2C eine Störung, so dass die Anlage 12C nicht mehr betrieben werden kann. Dennoch ist die Steuerungseinheit 2C noch funktionsfähig. Ihr kann somit nun beispielsweise die niedrigste Priorität D oder eine noch niedrigere Priorität zugeordnet werden. Als nächstes nimmt die Windenergieanlage 12D über ihre Steuerungseinheit 2D an der Kommunikation nicht mehr teil. Es kann somit von einem Defekt der Steuerungseinheit 2D ausgegangen werden. Die Steuerungseinheit 2C der stehenden Windenergieanlage 12C kann entsprechend die Steuerungsaufgaben der defekten Steuerungseinheit 2D übernehmen. Alternativ könnte auch die Steuerungseinheit 3 des Wettermasts 13 die Steuerungsaufgaben der Steuerungseinheit 2D übernehmen. In jedem Fall ist gewährleistet, dass die funktionsfähige Windenergieanlage 12D weiter betrieben werden kann. Das dazu jeweils erforderliche Steuerungsprogramm kann bei der die Aufgaben der defekten Steuerungseinheit 2D übernehmenden Steuerungseinheit von vornherein vorgesehen sein oder beispielsweise von den Servern 5 der zentralen Kommunikationseinheit 15 nachgeladen werden.

Die Entscheidung über die Koordination der Steuerungsaufgaben kann entweder durch einen menschlichen Bediener erfolgen oder automatisch durch vorgegebene Prioritätsmuster oder selbstlernende Optimierungsfunktionen von der zentralen Kommunikationseinheit 15 vorgenommen werden. Sofern die einspringende Steuerungseinheit das Steuerungsprogramm der defekten Steuerungseinheit 2D alternativ oder zusätzlich zu dem eigenen in ihren Speicher nachlädt, erhält sie weiterhin die erforderlichen letzten Einstellungen der defekten Steuerungseinheit, wie den Parametersatz sowie etwaige Sensoren- und Aktorenadressen, von der zentralen Kommunikationseinheit 15 und kann dann das Steuerungsprogramm der Windenergieanlage 12D starten. Sofern die Steuerungseinheit 3 des Wettermasts 13 die Steuerungsaufgaben der Steuerungseinheit 2D übernommen hat, ist es weiterhin möglich, dass anschließend die derzeit nicht benötigte Steuerungseinheit 2C der ausgefallenen Windenergieanlage 12C die Steuerungsaufgaben der Steuerungseinheit 3 für den Wettermast 13 in analoger Weise übernimmt. Auf diese Weise ist gewährleistet, dass es insgesamt zu keinem Ausfall von Steuerungsaufgaben kommt.

Ein weiteres Beispiel für den Ablauf des erfindungsgemäßen Verfahrens ist in der folgenden Tabelle 1 dargestellt:

| | **Steuerungen** | | | | | | | | |
|---|---|---|---|---|---|---|---|---|---|
| **Zeitl. Reihenfolge** | **1** | **2A Haupt B Alt A** | **2B Haupt B Alt A** | **2C Haupt B Alt A** | **2D Haupt B Alt A** | **3 Haupt C Alt B** | **4 Haupt C Alt B** | **Aufgabe/ Programm nicht ausführbar** | **Ereignis** |
| **1** | A | B | B | B | B | C | D | -- | |
| | | | | | | | | | **Steuerung** |
| | | | | | | | | | **1:** Ausfall |
| | | | | | | | | | **Steuerung** |
| | | | | | | | | | **2A:** Aufgabe |
| | | | | | | | | | A übernehmen, |
| **2** | X | A | B | B | B | C | B | D | Aufgabe B stoppen |
| | | | | | | | | | **Steuerung** |
| | | | | | | | | | **4:** Aufgabe |
| | | | | | | | | | B von 2A übernehmen |
| | | | | | | | | | und D stoppen |
| **3** | X | X | A | B | B | B | B | C, D | **Steuerung 2A:** Ausfall |
| | | | | | | | | | **Steuerung 2** Aufgabe A übernehmen, Aufgabe B stoppen |
| | | | | | | | | | **Steuerung 3:** Aufgabe B von 2B übernehme n und C stoppen |
| **4** | X | X | X | A | B | B | B | B, C, D | **Steuerung 2B:** Ausfall |
| | | | | | | | | | **Steuerung 2C:** Aufgabe A übernehmen, |
| | | | | | | | | | Aufgabe B stoppen |
| | | | | | | | | | **Steuerung 2B:** übernimmt die Aufgabe von Steuerung 4 |
| **5** | A | X | X | B | B | B | B | B, C | **Steuerung 1** wieder verfügbar und übernimmt Aufgabe A |
| | | | | | | | | | **Steuerung 2C:** übernimmt wieder Aufgabe B |
| **6** | A | B | B | B | B | C | D | -- | Alle Steuerungen arbeiten wieder mit ursprünglich en Aufgaben |

Dabei ist in der ersten Spalte eine zeitliche Reihenfolge verschiedener Ereignisse 1 bis 6 dargestellt, wobei die kleinste Zahl das erste zeitliche Ereignis darstellt und die höchste Zahl das letzte zeitliche Ereignis. In den weiteren Spalten 2 bis 8 sind die verschiedenen Steuerungen 1, 2A, 2B, 2C, 2D, 3 und 4 des Windparks aufgeführt. Während die Steuerungseinheit 1 grundsätzlich Steuerungsaufgaben der Priorität A ausführt, sind den übrigen Steuerungseinheiten 2A, 2B, 2C, 2D, 3, 4 als Hauptsteuerungsaufgaben im Normalfall jeweils Steuerungsaufgaben der Prioritäten B und C zugeordnet ("Haupt B" und "Haupt C"). Sie können jedoch alternativ weitere Steuerungsaufgaben übernehmen, beispielsweise der Prioritäten A und B ("Alt A" bzw. "Alt B"). Zu den verschiedenen Zeitpunkten 1 bis 6 sind in den Spalten 2 bis 8 der Tabelle jeweils die von den Steuerungseinheiten 1 bis 4 ausgeführten Steuerungsaufgaben unterschiedlicher Prioritäten A, B, C, D dargestellt. Ein X in einer Tabellenzelle zeigt an, dass die in der zugehörigen Spalte vorgesehene Steuerungseinheit ihre Aufgabe aufgrund eines Defekts nicht mehr ausführen kann. In der nächsten Spalte sind solche Steuerungsaufgaben bzw. Steuerungsprogramme aufgeführt, die zu bestimmten Zeitpunkten bzw. bei bestimmten Ereignissen, wie in der letzten Spalte aufgeführt, von keiner Steuerungseinheit mehr ausgeführt werden können.

In Tabelle 1 ist ein Beispiel für die Koordination der Steuerungseinheiten ohne eine separate zentrale Kommunikationseinheit gezeigt. Die Steuerungseinheiten kommunizieren untereinander und mit der zentralen Windparksteuerung 1 und übermitteln dabei jeweils ihren Status. Zusätzlich können sie jederzeit in einen Speicher (z.B. eigener Flashspeicher) das für die Ausführung der Aufgaben erforderliche Steuerungsprogramm und die aktuellen Einstellungen in diesem Fall von der zentralen Windparksteuerung 1 nachladen. Dazu können die entsprechenden Steuerungsdaten z.B. zyklisch von der zentralen Windparksteuerung 1 ermittelt und abgelegt werden. Durch die Vorkonfigurierung mit Haupt- und Alternativsteuerungsaufgaben ist sichergestellt, dass im Falle eines Ausfalls einer Steuerungseinheit eine andere Steuerungseinheit mit der gleichen bzw. einer niedrigeren Priorität als die defekte Steuerungseinheit die Aufgaben der defekten Steuerungseinheit übernimmt.

Ein weiteres Beispiel wird anhand der nachfolgenden Tabelle 2 erläutert:

| | **Steuerungen** | | | | | | | | |
|---|---|---|---|---|---|---|---|---|---|
| **Zeitl. Reihen -folge** | **1** | **2A** | **2B** | **2C** | **2D** | **3** | **4** | **Aufgabe/ Programm nicht ausführbar** | **Ereignis** |
| **1** | A | B | B | B | B | C | D | -- | |
| **2** | X | B | B | B | B | C | A | D | **Steuerung 1:** Ausfall |
| | | | | | | | | | **Steuerung 4:** Aufgabe A übernehmen, Aufgabe D nicht berücksichtigen |
| **3** | X | X | B | B | B | X | A | B, C, D | **Steuerung 2A+3:** Ausfall Keine Umverteilung |
| **4** | X | X | A | B | B | X | X | B, B, C, D | **Steuerung 4:** Ausfall |
| | | | | | | | | | **Steuerung 2B:** übernimmt die Aufgabe von Steuerung 4 |
| **5** | X | X | B | B | B | X | A | B, C, D | **Steuerung 4** wieder verfügbar |
| | | | | | | | | | **Steuerung 4** hat die kleinste Priorität und übernimmt die Aufgabe mit der größten Priorität |
| | | | | | | | | | **Steuerung 2B:** übernimmt die höchste offene Priorität, hier B |
| **6** | X | X | B | B | B | B | A | C, D | **Steuerung 3:** wieder verfügbar |
| | | | | | | | | | **Steuerung 3:** übernimmt die höchste offene Priorität, hier B |
| **7** | A | X | B | B | B | B | C | D | **Steuerung 1:** wieder verfügbar |
| | | | | | | | | | **Steuerung 1:** übernimmt die ursprüngliche Aufgabe, hier A |
| | | | | | | | | | **Steuerung 4:** übernimmt die höchste offene Priorität, hier C |
| **8** | A | B | B | B | B | C | D | -- | **Steuerung 2A:** wieder verfügbar |
| | | | | | | | | | **Steuerung 2A:** übernimmt die ursprüngliche Aufgabe, hier B |
| | | | | | | | | | **Steuerung 3:** übernimmt die ursprüngliche Aufgabe, hier C |
| | | | | | | | | | **Steuerung 4,** übernimmt die ursprüngliche Aufgabe, hier D |

Wie bei dem in Tabelle 1 erläuterten Beispiel kann auch bei diesem Beispiel eine Steuerungseinheit aufgrund ihres Speichers oder ihrer Prozessorleistung nur eine Steuerungsaufgabe gleichzeitig bearbeiten. In diesem Beispiel kommunizieren die Steuerungseinheiten fortlaufend über die zentrale Kommunikationseinheit 15 miteinander. Die zentrale Kommunikationseinheit 15 ist dabei jederzeit über den Status der einzelnen Steuerungseinheiten informiert und koordiniert die Übernahme von Steuerungsaufgaben defekter Steuerungseinheiten durch andere Steuerungseinheiten. Zu diesem Zweck werden in der zentralen Kommunikationseinheit 15 geeignete Priorisierungstabellen vorgehalten. Weiterhin wird durch die zentrale Kommunikationseinheit 15 sichergestellt, dass die Steuerungseinheiten die jeweils erforderlichen Steuerungsprogramme zur Verfügung gestellt bekommen.

Die nachfolgende Tabelle 3 zeigt ein weiteres Beispiel des erfindungsgemäßen Verfahrens:

| | **Steuerungen** | | | | | | | | |
|---|---|---|---|---|---|---|---|---|---|
| **Zeitl. Reihenfolge** | **1** | **2A** | **2B** | **2C** | **2 D** | **3** | **4** | **Aufgabe/ Programm nicht ausführbar** | **Ereignis** |
| **1** | A | B | B | B | B | C | D | -- | |
| **2** | X | B | B | B | B | C | D,A | -- | **Steuerung 1:** Ausfall |
| | | | | | | | | | **Steuerung 4:** Aufgabe A zusätzlich übernehmen |
| **3** | X | X | B,C | B,D | B | X | A,B | -- | **Steuerung 2A+3:** Ausfall |
| | | | | | | | | | **Steuerung 4:** Aufgabe D zugunsten B entfernen |
| | | | | | | | | | **Steuerung 2B** übernimmt Aufgabe mit Priorität C |
| | | | | | | | | | **Steuerung 2C** übernimmt Aufgabe mit Priorität D |
| **4** | X | X | B,C | B,B | B,A | X | X | D | **Steuerung 4:** Ausfall |
| | | | | | | | | | **Steuerung 2D:** hat noch Kapazität und übernimmt die Aufgabe mit Priorität A von Steuerung 4 |
| | | | | | | | | | **Steuerung 2C** übernimmt anstelle von Aufgabe mit Priorität D, die Aufgabe mit Priorität B von Steuerung 4 |
| | | | | | | | | | **Steuerung 2B:** kann so bleiben |
| **5** | X | X | B, C | B | B, D | X | A, B | -- | **Steuerung 4:** wieder verfügbar |
| | | | | | | | | | **Steuerung 4** hat die kleinste Priorität und übernimmt die Aufgabe mit den größten Prioritäten, hier A und B von Steuerungen 2D und 2C |
| | | | | | | | | | Steuerung 2D: hat Kapazität frei und übernimmt Aufgabe mit Priorität D |
| | | | | | | | | | **Steuerung 2C:** erhält freie Kapazitäten |
| | | | | | | | | | **Steuerung 2B:** kann so bleiben |
| **6** | X | X | B | B | B | C,D | A,B | -- | **Steuerung 3:** wieder verfügbar |
| | | | | | | | | | **Steuerung 3:** da alle höherprioren Aufgaben auf den ursprünglichen Steuerungen bzw. auf niederprioren Steuerungen laufen, übernimmt sie die ursprüngliche Aufgabe und die niederpriorste Aufgabe |
| | | | | | | | | | **Steuerung 2B und 2D:** erhalten freie Kapazitäten |
| **7** | A | X | B | B | B | C | D,B | -- | **Steuerung 1:** wieder verfügbar |
| | | | | | | | | | **Steuerung 1:** übernimmt die ursprüngliche Aufgabe, hier A |
| | | | | | | | | | **Steuerung 4:** übernimmt die ursprüngliche Aufgabe, hier D |
| | | | | | | | | | **Steuerung 3:** erhält freie Kapazitäten |
| **8** | A | B | B | B | B | C | D | -- | **Steuerung 2A:** wieder verfügbar |
| | | | | | | | | | **Steuerung 2A:** übernimmt die ursprüngliche Aufgabe, hier B |
| | | | | | | | | | **Steuerung 4:** erhält freie Kapazitäten |

Dabei ist ein ähnliches Beispiel wie in Tabelle 2 dargestellt. Im Unterschied zu dem Beispiel aus Tabelle 2 ist es jedoch einigen Steuerungseinheiten aufgrund ihrer Leistungsstärke möglich, gleichzeitig mehrere Steuerungsprogramme auszuführen und somit mehrere Steuerungsaufgaben zu übernehmen. In dem dargestellten Beispiel können einige der Steuerungseinheiten zwei Steuerungsaufgaben gleichzeitig ausführen. Auf diese Weise kann die Verfügbarkeit der Anlage weiter erhöht werden.

## Patentansprüche

1. Verfahren zur Steuerung eines Windparks mit mehreren Windenergieanlagen und mehreren Steuerungseinheiten, die Steuerungsaufgaben innerhalb des Windparks ausführen, umfassend die folgenden Schritte:
(a) den Steuerungseinheiten (1, 2A, 2B, 2C, 2D, 3, 4) wird abhängig von den durch sie auszuführenden Steuerungsaufgaben jeweils eine Priorität zugeordnet,
(b) die Steuerungseinheiten (1, 2A, 2B, 2C, 2D, 3, 4) kommunizieren während des Betriebs des Windparks fortlaufend miteinander und/oder mit einer zentralen Kommunikationseinheit (15),
(c) sofern ein Defekt einer ersten Steuerungseinheit (1, 2A, 2B, 2C, 2D, 3, 4) des Windparks eintritt, übernimmt eine zweite Steuerungseinheit (1, 2A, 2B, 2C, 2D, 3, 4) des Windparks die Steuerungsaufgaben der defekten Steuerungseinheit (1, 2A, 2B, 2C, 2D, 3, 4), wobei die zweite Steuerungseinheit (1, 2A, 2B, 2C, 2D, 3, 4) abhängig von der ihr zugeordneten Priorität ausgewählt wird und die gleiche oder eine niedrigere Priorität besitzt als die defekte Steuerungseinheit (1, 2A, 2B, 2C, 2D, 3, 4).

2. Verfahren nach Anspruch 1, **dadurch gekennzeichnet, dass** die zweite Steuerungseinheit (1, 2A, 2B, 2C, 2D, 3, 4) vor der Übernahme der Steuerungsaufgaben der defekten Steuerungseinheit (1, 2A, 2B, 2C, 2D, 3, 4) eigene Steuerungsaufgaben ausgeführt hat.

3. Verfahren nach Anspruch 2, **dadurch gekennzeichnet, dass** die zweite Steuerungseinheit (1, 2A, 2B, 2C, 2D, 3, 4) nach der Übernahme der Steuerungsaufgaben der defekten Steuerungseinheit (1, 2A, 2B, 2C, 2D, 3, 4) die zuvor ausgeführten eigenen Steuerungsaufgaben weiterhin ausführt.

4. Verfahren nach Anspruch 2, **dadurch gekennzeichnet, dass** die zweite Steuerungseinheit (1, 2A, 2B, 2C, 2D, 3, 4) nach der Übernahme der Steuerungsaufgaben der defekten Steuerungseinheit (1, 2A, 2B, 2C, 2D, 3, 4) die zuvor ausgeführten eigenen Steuerungsaufgaben nicht mehr ausführt.

5. Verfahren nach Anspruch 4, **dadurch gekennzeichnet, dass** eine dritte Steuerungseinheit (1, 2A, 2B, 2C, 2D, 3, 4) des Windparks die Steuerungsaufgaben der zweiten Steuerungseinheit (1, 2A, 2B, 2C, 2D, 3, 4) übernimmt.

6. Verfahren nach Anspruch 5, **dadurch gekennzeichnet, dass** die dritte Steuerungseinheit (1, 2A, 2B, 2C, 2D, 3, 4) abhängig von der ihr zugeordneten Priorität ausgewählt wird und die gleiche oder eine niedrigere Priorität besitzt als die zweite Steuerungseinheit (1, 2A, 2B, 2C, 2D, 3, 4).

7. Verfahren nach Anspruch 1, **dadurch gekennzeichnet, dass** die zweite Steuerungseinheit (1, 2A, 2B, 2C, 2D, 3, 4) eine Ersatzsteuerungseinheit ist, die vor der Übernahme der Steuerungsaufgaben der defekten Steuerungseinheit (1, 2A, 2B, 2C, 2D, 3, 4) keine eigenen Steuerungsaufgaben ausgeführt hat.

8. Verfahren nach einem der vorhergehenden Ansprüche, **dadurch gekennzeichnet, dass** einer ersten Steuerungseinheit (1, 2A, 2B, 2C, 2D, 3, 4) nach der Übernahme der Steuerungsaufgaben einer zweiten Steuerungseinheit (1, 2A, 2B, 2C, 2D, 3, 4) mit höherer Priorität solange die höhere Priorität der zweiten Steuerungseinheit (1, 2A, 2B, 2C, 2D, 3, 4) zugeordnet wird, wie sie die Steuerungsaufgaben der zweiten Steuerungseinheit (1, 2A, 2B, 2C, 2D, 3, 4) ausführt.

9. Verfahren nach einem der vorhergehenden Ansprüche, **gekennzeichnet durch** den weiteren Verfahrensschritt (b) des Anspruchs 11.

10. Verfahren nach Anspruch 9, **gekennzeichnet durch** die weiteren Verfahrensschritte mindestens eines der Ansprüche 12 bis 15.

11. Verfahren zur Steuerung eines Windparks mit mehreren Windenergieanlagen und mehreren Steuerungseinheiten, die Steuerungsaufgaben innerhalb des Windparks ausführen, umfassend die folgenden Schritte:
(a) die Steuerungseinheiten (1, 2A, 2B, 2C, 2D, 3, 4) kommunizieren während des Betriebs des Windparks fortlaufend miteinander und/oder mit einer zentralen Kommunikationseinheit (15),
(b) sofern ein Defekt einer ersten Steuerungseinheit (1, 2A, 2B, 2C, 2D, 3, 4) des Windparks eintritt, übernimmt eine zweite Steuerungseinheit (1, 2A, 2B, 2C, 2D, 3, 4) des Windparks, die zuvor eigene Steuerungsaufgaben ausgeführt hat, die Steuerungsaufgaben der defekten Steuerungseinheit (1, 2A, 2B, 2C, 2D, 3, 4), wobei die zweite Steuerungseinheit (1, 2A, 2B, 2C, 2D, 3, 4) abhängig davon ausgewählt wird, ob sie eine ausreichende Kapazität zur Ausführung der Steuerungsaufgaben der defekten Steuerungseinheit (1, 2A, 2B, 2C, 2D, 3, 4) zusätzlich zu ihren eigenen Steuerungsaufgaben besitzt, und die zweite Steuerungseinheit (1, 2A, 2B, 2C, 2D, 3, 4) nachfolgend sowohl ihre eigenen Steuerungsaufgaben als auch die Steuerungsaufgaben der defekten Steuerungseinheit (1, 2A, 2B, 2C, 2D, 3, 4) ausführt.

12. Verfahren nach einem der Ansprüche 1 bis 11, **dadurch gekennzeichnet, dass** mindestens eine Steuerungseinheit (1, 2A, 2B, 2C, 2D, 3, 4) mindestens ein Steuerungsprogramm zur Ausführung der Steuerungsaufgaben mindestens einer anderen Steuerungseinheit (1, 2A, 2B, 2C, 2D, 3, 4) des Windparks aufweist.

13. Verfahren nach einem der Ansprüche 1 bis 11, **dadurch gekennzeichnet, dass** die Steuerungseinheiten (1, 2A, 2B, 2C, 2D, 3, 4) ein Steuerungsprogramm zur Ausführung der Steuerungsaufgaben einer anderen Steuerungseinheit (1, 2A, 2B, 2C, 2D, 3, 4) nach Bedarf von einer zentralen Kommunikationseinheit (15) abrufen, bevor sie die Steuerungsaufgaben der anderen Steuerungseinheit (1, 2A, 2B, 2C, 2D, 3, 4) übernehmen.

14. Verfahren nach einem der vorhergehenden Ansprüche, **dadurch gekennzeichnet, dass** die Steuerungseinheiten (1, 2A, 2B, 2C, 2D, 3, 4) mit einer zentralen Kommunikationseinheit kommunizieren (15) und die zentrale Kommunikationseinheit (15) die Zuordnung der Steuerungsaufgaben zu den Steuerungseinheiten (1, 2A, 2B, 2C, 2D, 3, 4) im Fall eines Defekts einer Steuerungseinheit (1, 2A, 2B, 2C, 2D, 3, 4) durchführt.

15. Verfahren nach einem der Ansprüche 1 bis 13, **dadurch gekennzeichnet, dass** die Steuerungseinheiten (1, 2A, 2B, 2C, 2D, 3, 4) miteinander kommunizieren und die Zuordnung der Steuerungsaufgaben zu den Steuerungseinheiten (1, 2A, 2B, 2C, 2D, 3, 4) im Fall eines Defekts einer Steuerungseinheit (1, 2A, 2B, 2C, 2D, 3, 4) automatisch entsprechend einer vorher festgelegten Reihenfolge erfolgt.
